# EUROPEAN PATENT SPECIFICATION

(11) **EP 2 394 895 B1**
(45) Date of publication and mention of the grant of the patent: **28.10.2015**
(21) Application number: 11169034.3
(22) Date of filing: 08.06.2011
(51) Int. Cl.: B62K 11/04, B62K 25/28, B62M 7/02, B62K 25/30

(54) **Motorcycle**
Motorrad
Motocyclette

(30) Priority: 09.06.2010 ES 201030594 U
(43) Date of publication of application: 14.12.2011
(73) Proprietor: Belil Creixell, Jose Luis, 08021 Barcelona (ES)
(72) Inventor: Belil Creixell, Jose Luis, 08021 Barcelona (ES)
(74) Representative: Oficina Ponti, SLP

(56) References cited:
- GB-A- 2 424 631
- US-A1- 2008 223 644
- US-A1- 2009 223 731

## Description

The present invention refers to a motorcycle, preferably to a motorcycle to be used on irregular grounds.

### BACKGROUND OF THE INVENTION

The motorcycles currently known comprise a transmission mechanism from the crankshaft to the drive wheel in two steps: a primary transmission that extends from the crankshaft to the gearbox or gear group and a secondary transmission that extends from said gearbox or gear group to said drive wheel.

The primary transmission can be by chain or gears, and the secondary transmission can be by conventional link chain or by any other suitable transmission, e.g. by shaft, belt, etc.

One example of motorcycle is disclosed in Spanish patent P9200916, whose holder is the applicant of the present application. In this motorcycle, the primary transmission is placed between the engine crankshaft and the gearbox. The transmission elements of the secondary transmission and a tertiary transmission are placed at the same side of the motorcycle, with respect to its longitudinal axis.

This arrangement has the drawback that the motorcycle must be wide, which causes an ergonomic and space problem.

The ergonomic problem is important, because some of the components of the motorcycle must be placed in positions that can disturb the motorcycle rider, mainly when he/she rides standing up.

Document GB 2424631 A discloses a motorcycle, in accordance with the preamble of claim 1, that provides positions for the rider's feet that are located behind the engine and in front of the rear tyre in the direction of travel, in which positions the distance between the inner sides of the rider's feet may be less than the width of the rear tyre.

Patent application US 2008/0223744 A1 relates to a motorcycle and an engine/gearbox unit for said motorcycle.

### DESCRIPTION OF THE INVENTION

With the motorcycle of the invention said drawbacks can be solved, presenting other advantages that will be described.

The motorcycle of the present invention comprises: an engine with a gearbox; a gear group; a drive wheel; a secondary transmission chain placed between said engine and said gear group; a tertiary transmission chain placed between said gear group and said drive wheel; and it is characterised in that said secondary transmission chain is placed on a side with respect to the longitudinal axis of the motorcycle and said tertiary transmission chain is placed on the other side with respect to the longitudinal axis of the motorcycle.

Furthermore, in the motorcycle according to the present invention, said gear group preferably comprises a detachable hub, wherein two brake discs and its gear rims are advantageously placed.

According to a preferred embodiment, said hub is formed by three detachable pieces, being mounted and removed from frontal tips of the swing arm curved inwardly towards the inner part of the motorcycle frame and from ears of the motorcycle frame.

The motorcycle according to the present invention optionally comprises a shock absorber of said drive wheel, whose upper part of said shock absorber is advantageously inclined rearwards with respect to the motorcycle vertical, to obtain a longer length.

Furthermore, a preferred embodiment of the motorcycle according to the present invention also comprises a swing arm with at least one hole on the bridge permitting the passage of the collector that connects the engine with at least a stretch of said collector, the hotter one, preferably below said gear group.

In some embodiments, the motorcycle according the present invention also comprises cams to tighten the secondary transmission, connected with the rear support of the engine through eccenters.

With the motorcycle according to preferred embodiments of the present invention the following advantages can be obtained:
- the motorcycle can be narrower than the motorcycle cited previously thanks to the design of the hub with three elements;
- a good brake can be achieved with a reduced diameter of the brake discs, a low weight, less angular inertia, increasing the heat evacuation surface of the brake and not-suspended mass in the wheel is removed;
- the diameter of the gear rim of the drive wheel can be reduced at a maximum;
- the tightness of the secondary and tertiary transmission chains is always constant;
- it permits the shock absorber to have a greater length, up to 500 mm, so that it has a greater range, maintaining the same seat and fender height, so that the ergonomics is not impaired.

### BRIEF DESCRIPTION OF THE DRAWINGS

For a better understanding of what has been described some drawings are attached in which, diagrammatically and only as a non-limitative example, a practical embodiment is shown.
Fig. 1 is a diagrammatical side view of a motorcycle according to a first embodiment of the present invention;
Fig. 2 is a diagrammatical plan view of the section of the central part of the motorcycle according to the first embodiment of the present invention;
Fig. 3 is a diagrammatical perspective view of the hub of the gear group of the motorcycle according to the first embodiment of the present invention; and
Fig. 4 is a side elevation view of the tightening cam of the secondary transmission of the motorcycle according to the first embodiment of the present invention.

### DESCRIPTION OF A PREFERRED EMBODIMENT

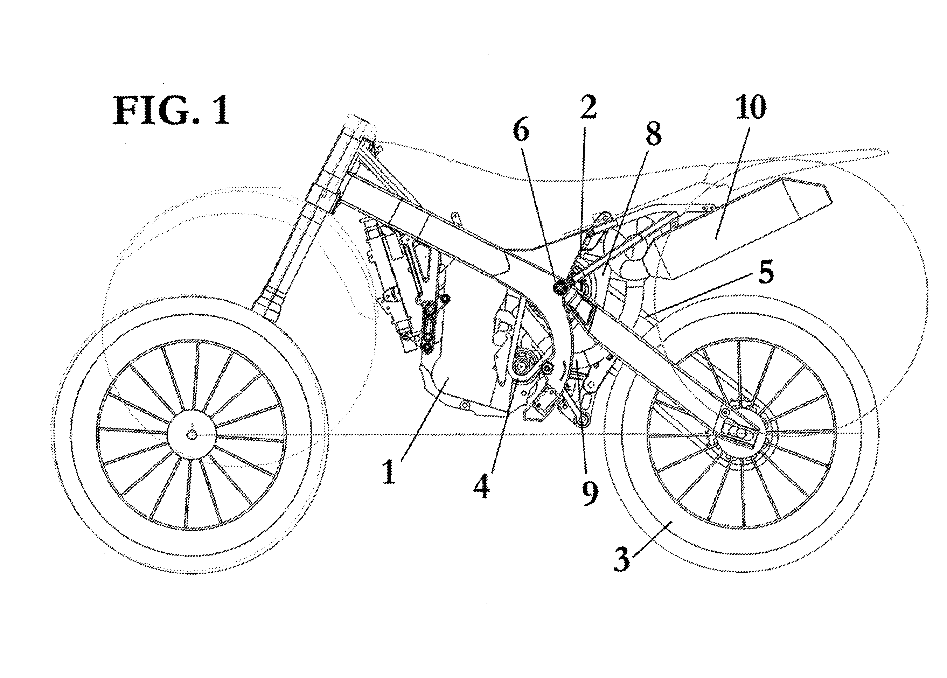

As shown in Fig. 1, a motorcycle according to a first embodiment of the present invention comprises an engine 1, a gear and brake group 2, a drive wheel 3, a secondary transmission chain 4 placed between said engine 1 and said gear group 2, and a tertiary transmission chain 5 placed between said gear group 2 and said drive wheel 3.

The primary transmission has not been shown in the drawings because it is conventional, and it is placed between the crankshaft of the engine and the gearbox.

It must be pointed out that in the present description, the term "transmission chain" means that comprises any suitable transmission element for motorcycles and it is not a limitation for the scope of the present invention, as defined in the attached claims.

In the motorcycle according to the first embodiment of the present invention, said secondary transmission chain 4 is placed on a side of the motorcycle, with respect to its longitudinal axis, and said tertiary transmission chain 5 is placed on the other side of the motorcycle, with respect to said longitudinal axis.

Furthermore, the motorcycle according to the first embodiment of the present invention also comprises a hub 6, wherein there are placed one or two brake discs 7 and the gear rims 2a, forming three detachable pieces 6a, 6b which permit to join and detach the assembly with the upper tips 14a of the swing bar 14, inwardly curved towards the motorcycle frame, and the ears of the peripheral frame, occupying the minimum space and whole thickness.

The motorcycle according to the first embodiment of the present invention also comprises a shock absorber 8 of said drive wheel 3, the upper part of said shock absorber 8 being inclined rearwardly with respect to the lower part of said shock absorber 8, as shown in Fig. 1.

The end of this arrangement of the shock absorber is to provide a longer run of the rod, which can have a length greater than 500 mm. This run can be seen in Fig. 1, wherein the rear wheel has been shown in its two end positions, obtaining a sweep of 370 mm, greater than the conventional motorcycles, not increasing the height of the seat with respect to the ground.

The motorcycle according to the first embodiment of the present invention also comprises a collector 9 connecting the engine 1 with the exhaust silencer 10 of the motorcycle, at least a stretch of said collector 9 being placed below said gear group 2. This arrangement of the collector 9 permits its hotter part to be apart enough from the motorcycle seat, preventing the rider to receive hot from the hotter zone of said collector 9.

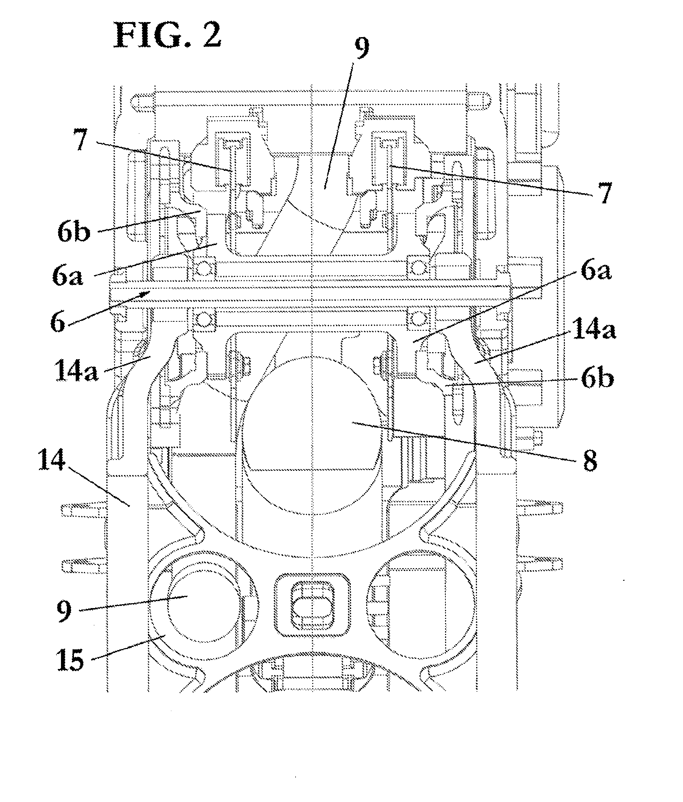

As shown in Fig. 2, the motorcycle according to the first embodiment of the present invention comprises a swing arm 14 with at least one hole 15 in the bridge, through which a collector 9 passes, connecting the engine 1 with the exhaust silencer 10 of the motorcycle. At least a stretch of said collector 9, the hotter one, is placed below said gear group 2.

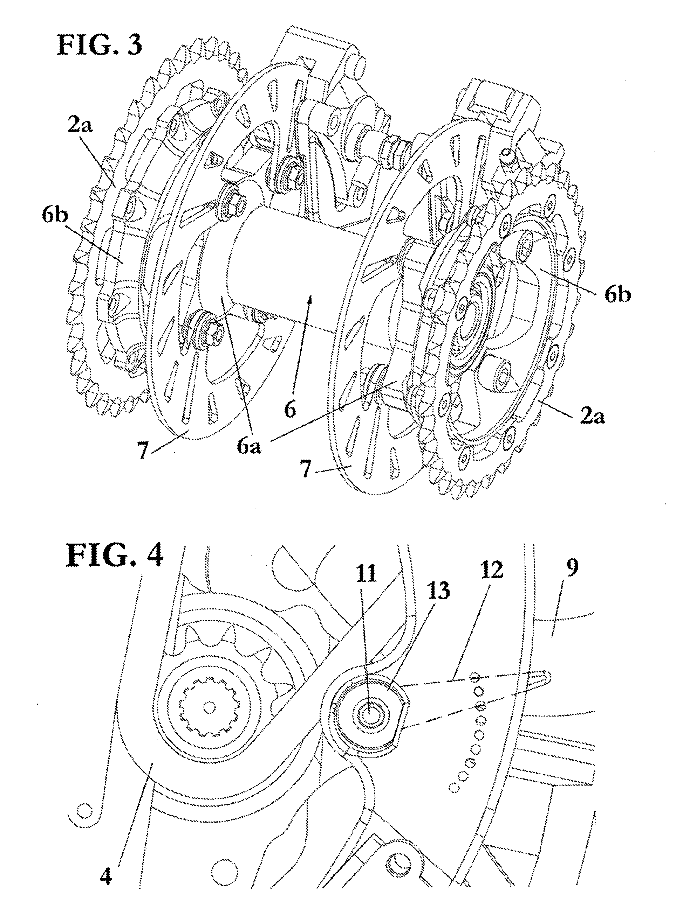

In Fig. 3 the gear group 2 is shown in a perspective view, wherein the arrangement of the gear rims 2a and the brake discs 7 can be seen, with respect to the hub 6 and the three pieces 6a, 6b forming it.

In Fig. 4 means for tightening the secondary transmission 4 is shown, connected with the rear support of the engine 11 through a eccenter 13.

For simplicity reasons, the rest of the components of the motorcycle of the present invention are not described, because they are conventional and do not form part of the present invention.

Even though reference is made to a specific embodiment of the invention, it is clear for a person skilled in the art that the described motorcycle is susceptible of numerous variations and modifications, and that all the details cited can be substituted by other technically equivalent ones, without departing from the scope of protection defined by the attached claims.

## Claims

1. Motorcycle, comprising:
- an engine (1) with a gearbox;
- a gear group (2);
- a drive wheel (3);
- a secondary transmission chain (4) placed between said engine (1) and said gear group (2);
- a tertiary transmission chain (5) placed between said gear group (2) and said drive wheel (3);
**characterised in that** said secondary transmission chain (4) is placed on a side with respect to the longitudinal axis of the motorcycle and said tertiary transmission chain (5) is placed on the other side with respect to the longitudinal axis of the motorcycle.

2. Motorcycle according to claim 1, wherein said gear group (2) comprises a detachable hub (6), wherein one or two brake discs and its gear rims (2a) are placed.

3. Motorcycle according to claim 1 or 2, wherein said hub (6) is formed by three detachable pieces (6a, 6b), being joined and detached from frontal tips (14a) of a swing arm inwardly curved towards the motorcycle frame and from ears of the motorcycle frame.

4. Motorcycle according to anyone of the previous claims, wherein it comprises a shock absorber (8) of said drive wheel (3), whose upper part of said shock absorber (8) is rearwardly inclined with respect to motorcycle vertical.

5. Motorcycle according to anyone of the previous claims, wherein it comprises a swing arm (14) provided with at least one hole (15), through which at least one collector (9) passes, connecting the engine (1) with the exhaust silencer (10) of the motorcycle, a stretch of said collector (9) being placed below said gear group (2).

6. Motorcycle according to claim 1, wherein it comprises cams (12) to tighten the secondary transmission (4), connected with the engine axis (11) through eccenters (13) .

## Patentansprüche

1. Motorrad aufweisend
- einen Motor (1) mit einem Getriebegehäuse,
- eine Getriebegruppe (2),
- ein Antriebsrad (3),
- eine sekundäre Übertragungskette (4), die zwischen dem Motor (1) und der Getriebegruppe angeordnet ist,
- eine tertiäre Übertragungskette (5), die zwischen der Getriebegruppe (2) und dem Antriebsrad (3) angeordnet ist,
**dadurch gekennzeichnet, dass**
die sekundäre Übertragungskette (4) auf einer Seite bezüglich der Längsachse des Motorrads und die tertiäre Übertragungskette (5) auf der anderen Seite bezüglich der Längsachse des Motorrads angeordnet ist.

2. Motorrad nach Anspruch 1, wobei die Getriebegruppe (2) eine lösbare Nabe (6) aufweist, an der eine oder zwei Bremsscheiben und deren Zahnkränze (2a) angeordnet sind.

3. Motorrad nach Anspruch 1 oder 2, wobei die Nabe (6) aus drei lösbaren Teilen (6a, 6b) besteht, die an vorderen Enden (14a) einer Schwinge lösbar befestigt sind, die nach innen in Richtung auf den Motorradrahmen und von den Aufnahmen des Motorradrahmens aus gekrümmt ist.

4. Motorrad nach einem der vorhergehenden Ansprüche, das einen Stoßdämpfer (8) des Antriebsrads (3) umfasst, wobei der obere Teil des Stoßdämpfers (8) zur Vertikalen des Motorrads nach hinten schräggestellt ist.

5. Motorrad nach einem der vorhergehenden Ansprüche, aufweisend eine Schwinge (14), die mindestens eine Öffnung (15) aufweist, durch welche sich mindestens ein Kollektor (9) erstreckt, der den Motor (1) mit dem Auspuffschalldämpfer (10) des Motorrads verbindet, wobei ein Abschnitt des Kollektors (9) unter der Getriebegruppe (2) angeordnet ist.

6. Motorrad nach Anspruch 1, aufweisend Nocken (12), um die sekundäre Übertragungskette (4), die mit der Motorachse (11) über Exzenter (13) verbunden ist, zu spannen.

## Revendications

1. Motocyclette, comprenant:
- un moteur (1) comprenant une boîte de vitesses;
- un groupe de pignons (2);
- une roue motrice (3);
- une chaîne de transmission secondaire (4) qui est placée entre ledit moteur (1) et ledit groupe de pignons (2);
- une chaîne de transmission tertiaire (5) qui est placée entre ledit groupe de pignons (2) et ladite roue motrice (3),
**caractérisée en ce que** ladite chaîne de transmission secondaire (4) est placée sur un côté par rapport à l'axe longitudinal de la motocyclette, et ladite chaîne de transmission tertiaire (5) est placée sur l'autre côté par rapport à l'axe longitudinal de la motocyclette.

2. Motocyclette selon la revendication 1, dans laquelle ledit groupe de pignons (2) comprend un moyeu détachable (6) dans lequel un ou deux disque(s) de frein et leurs couronnes dentées (2a) sont placés.

3. Motocyclette selon la revendication 1 ou 2, dans laquelle ledit moyeu (6) est formé par trois pièces détachables (6a, 6b), qui sont jointes aux et détachées des extrémités frontales (14a) d'un bras oscillant incurvé vers l'intérieur en direction du cadre de motocyclette et à partir d'oreilles du cadre de motocyclette.

4. Motocyclette selon l'une quelconque des revendications précédentes, dans laquelle elle comprend un absorbeur de chocs (8) de ladite roue motrice (3), la partie supérieure dudit absorbeur de choc (8) étant inclinée vers l'arrière par rapport à l'axe vertical de la motocyclette.

5. Motocyclette selon l'une quelconque des revendications précédentes, dans laquelle elle comprend un bras oscillant (14) comportant au moins un trou (15) à travers lequel au moins un collecteur (9) passe, connectant le moteur (1) au pot d'échappement (10) de la motocyclette, une extension dudit collecteur (9) étant placée en dessous dudit groupe de pignons (2).

6. Motocyclette selon la revendication 1, dans laquelle elle comprend des cames (12) pour serrer la transmission secondaire (4), connectées à l'axe de moteur (11) par l'intermédiaire d'excentriques (13).
